# EUROPÄISCHE PATENTSCHRIFT

(11) **EP 0 624 634 B1**
(45) Veröffentlichungstag und Bekanntmachung des Hinweises auf die Patenterteilung: **06.08.1997**
(21) Anmeldenummer: 94810264.5
(22) Anmeldetag: 05.05.1994
(51) Int. Cl.: C09J 111/02, C09J 133/06, C08J 3/16, C08K 3/38, C08J 5/12

(54) **Aufsprühbare Dispersion und Verfahren zum elastischen Verkleben zweier Substratflächen**
Sprayable dispersion and method for elastic bonding of two substates
Dispersion pulvérisable et procédé de collage élastique de deux substrats

(30) Priorität: 11.05.1993 CH 1442/93
(43) Veröffentlichungstag der Anmeldung: 17.11.1994
(73) Patentinhaber: ALFA KLEBSTOFFE AG, 8454 Buchberg (CH)
(72) Erfinder: Simmler, Emil, CH-8454 Buchberg (CH); Simmler, Thomas, CH-8454 Buchberg (CH)
(74) Vertreter: Patentanwälte Breiter + Wiedmer AG

(56) Entgegenhaltungen:
- EP-A- 0 438 906
- EP-A- 0 470 928
- FR-A- 2 099 391

## Beschreibung

Die Erfindung bezieht sich auf eine aufsprühbare Dispersion auf der Basis eines Acrylsäureestercopolymers und eines kolloidalen Chloroprenpolymerisats. Weiter betrifft die Erfindung ein Verfahren zum elastischen Verkleben zweier Substratflächen, wovon wenigstens eine porös ausgebildet ist, mit dieser Dispersion. Hier und im folgenden wird mit der Bezeichnung Acrylsäureestercopolymer auch ein Acrylsäureester-Styrol-Copolymer umfasst.

Werden zwei Substratflächen mit einem Kleber beschichtet und nach dem Trocknen des Klebers zusammengedrückt, spricht man von einem Kontaktkleber. Dieser kann also seine Wirkung erst entfalten, wenn das Lösungsmittel oder das Wasser verdunstet ist. Wird lediglich eine der beiden zu verbindenden Substratflächen mit einem Kleber beschichtet und die andere Substratfläche nach dem Verdunsten des Lösungsmittels oder Wassers aufgedrückt, handelt es sich um einen Haftkleber. Von besonderer Bedeutung sind Kontaktkleber auf der Basis von Polychloropren, Harzen und organischen Lösungsmitteln. Der Feststoffgehalt liegt in der Regel lediglich bei 10 bis 25 Gew.-%, die organischen Lösungsmittel überwiegen also bei weitem.

In leicht flüchtigen organischen Lösungsmitteln gelöste Kontaktkleber sind rasch verarbeitbar. Dieser Vorteil wird jedoch durch eine Reihe von Nachteilen weitgehend oder sogar überwiegend aufgehoben. Die beim Spritzen und Trocknen entweichenden organischen Lösungsmittel stellen einen bedeutend arbeitsökonomischen Verlust dar. Weiter sind die sich verflüchtigenden Lösungsmittel feuergefährlich, gesundheitsschädigend und/oder umweltbelastend. Deshalb müssen stets besondere Anlagen gebaut und Vorkehrungen getroffen werden, um das unkontrollierte Entweichen von Lösungsmitteln zu verhindern oder zumindest zu vermindern.

Aus der EP,A1 0470928 ist ein Verfahren zum elastischen Verkleben zweier Substratflächen bekannt. Von diesen ist wenigstens eine porös ausgebildet. Eine kautschukhaltige erste Dispersion mit einem Acrylsäureestercopolymer und eine kolloidale zweite Dispersion eines Chloroprenpolymerisats werden nach vorheriger oder mit gleichzeitiger Durchmischung auf wenigstens eine der Substratflächen aufgetragen. Die zu verklebenden Substratflächen werden, unmittelbar darauf oder später, mit nassen Klebstoffdispersionen aufeinandergelegt und angedrückt. Die beiden Substratflächen haften mit hoher Initialkraft, auch bei Raumtemperatur und erreichen eine hohe Endkraft. Es sind keinerlei organische Lösungsmittel notwendig, dagegen entstehen nur geringe Abwassermengen, welche gut gereinigt und entsorgt werden können. Das Anwendungsspektrum ist breit, liegt jedoch insbesondere beim Verkleben von Schaumstoffen.

Die Erfinder haben sich die Aufgabe gestellt, eine aufsprühbare Dispersion und ein Verfahren zum elastischen Verkleben zweier Substratflächen mit einer Dispersion nach der eingangs genannten Art zu schaffen, welche die Initialhaftkraft von nass aufeinandergelegten Substratflächen weiter verbessert, weiterhin eine hohe Endhaftkraft und insbesondere eine lange Verarbeitungszeit nach dem Auftragen der Dispersion gewährleistet, ohne die ökologischen und ökonomischen Vorteile einzubüssen.

In bezug auf die aufsprühbare Dispersion wird die Aufgabe erfindungsgemäss dadurch gelöst, dass sie Borsäure enthält, welche in die Dispersion eingemischt ist. Spezielle und weiterführende Ausführungsformen der Erfindung sind Gegenstand von abhängigen Patentansprüchen.

Die aufsprühbaren Dispersionen können als Kontakt- oder Haftkleber eingesetzt werden. Eine hohe, mit derjenigen von lösungsmittelhaltigen Klebstoffen absolut vergleichbare Initialhaftkraft kann bereits in Sekundenschnelle nach dem Auftragen erreicht werden, wenn die beiden Substratflächen nass aufeinandergelegt und aneinandergedrückt werden. Eine ähnlich hohe, während längerer Zeit noch höhere Initialhaftkraft wird erreicht, wenn die aufgetragene Dispersion vorerst abgelüftet, und dann die Substratflächen nass aufeinander gelegt werden. Bei einem kürzeren Maschinenstop entstehen keine Produktionsausfälle, die aufgetragene Dispersion bleibt lange nass.

Die Klebstoffdispersionen sind drucksensibel. Sofort nach dem Andrücken wird auch der eigentliche Abbindevorgang eingeleitet, ohne dass Wasser abgegeben wird. Dies ist von grosser praktischer Bedeutung, weil mit Dispersion beschichtete, nasse Oberflächen aufeinandergedrückt werden können und sofort die für eine Weiterverarbeitung und/oder einen Transport notwendige Initialhaftkraft erreichen. Diese steigt auch nach der Verarbeitung rasch weiter an und erreicht z.B. auch bei einem Schaum mittlerer Härte bald die Ausreissgrenze.

Die Dispersionen werden in einem Mischer üblicher Bauart hergestellt, wobei das Chloroprenpolymerisat vorzugsweise am Schluss zugegeben wird. Eine fertig gemischte Dispersion kann unter Luftabschluss mehrere Monate aufbewahrt werden, ohne zu koagulieren.

Acrylsäureestercopolymere, Acrylsäureester-Styrol-Copolymere wie erwähnt eingeschlossen, können z.B. durch Zugabe von natürlichem, nicht vulkanisiertem Latex kautschukhaltig gemacht werden. Das Chloroprenpolymerisat kann kleinere Mengen anderer Monomere als Chloropren enthalten, vorzugsweise andere Diene, Acrylsäure oder Methacrylsäure. Insgesamt beträgt jedoch die Menge der zugesetzten anderen Monomere bevorzugt höchstens 30 Gew.-%, bezogen auf das Chloroprenpolymerisat. Die mittlere Teilchengrösse des Acrylsäureestercopolymeren und des Chloroprenpolymerisats liegt vorzugsweise im submikronen Bereich, insbesondere bei etwa 0,2 µm.

Wässrige Dispersionen des Acrylsäureestercopolymers und des Chloroprenpolymerisats haben beispielsweise einen Feststoffgehalt von je 30 bis 70 Gew.-%, insbesondere 40 bis 65 Gew.-%.

Das isolierte Verhältnis des Acrylsäureestercopolymers zum kolloidalen Chloroprenpolymerisat kann in einem verhältnismässig breiten Band variieren, vorzugsweise von 10 Gew.-% Acrylsäureestercopolymer : 90 Gew.-% Chloroprenpolymerisat bis 60 Gew.-% Acrylsäureestercopolymer : 40 Gew.-% Chloroprenpolymerisat. Mit anderen Worten liegt das Gewichtsverhältnis Acrylsäureestercopolymer zum Chloroprenpolymerisat bevorzugt im Bereich zwischen 1 : 10 und 1,5 : 1. In der Praxis liegt das Mischverhältnis meist bei etwa 50 : 50 Gew.-%, bei einer Abweichung wird tendenzmässig mehr Chloroprenpolymerisat zugegeben. Die Angaben über die Mischverhältnisse beziehen sich immer auf den Feststoffgehalt.

Für eine allfällige Einstellung von pH-Werten und die Zugabe von Hilfsstoffen wird auf die EP,A1 0470928, Seite 4, Zeilen 22 bis 33, verwiesen.

Die erfindungswesentlich Zugabe von Borsäure (H₃BO₃) in die Dispersion erfolgt vorzugsweise in einer Menge von 0,1 bis 10 Gew.-%, insbesondere 0,5 bis 5 Gew.-%, bezogen auf den Feststoffgehalt. Durch die Zugabe von Borsäure kann die Initialhaftkraft der aufsprühbaren Dispersion drastisch verbessert werden, auch bei längerer Ablüftzeit.

Ausser der Borsäure kann Natriumlaurylsulfat zugegeben werden, vorzugsweise in einer Konzentration von 0,1 bis 3 Gew.%, bezogen auf die fertige Mischung. Dadurch werden beim bevorzugten Aufsprühen die mechanischen Eigenschaften, insbesondere die Bearbeitbarkeit, verbessert.

Weiter können organische Komponenten zugegeben werden, welche erwünschte Eigenschaften der Dispersion spezifisch fördern:
N-Alkylpyrrolidon, beispielsweise in Form von N-Methyl-2-Pyrrolidon bis zu 15 Gew.-%, bezogen auf den Feststoffgehalt. und/oder
N-Octyl-2-Pyrrolidon oder N-Dodecyl-2-Pyrrolidon, jeweils bis zu 10 Gew. -%, wiederum bezogen auf den Feststoffgehalt.

N-Methyl-2-Pyrrolidon kann auch mit N-Octyl-2-Pyrrolidon oder N-Dodecyl-2-Pyrrolidon, bei unveränderten Gewichtsanteilen, gemischt sein. N-Methyl-2-Pyrrolidon dient als Weichmacher, die beiden anderen Pyrrolidone fördern eher die Koagulationsfähigkeit und Benetzung.

Mit dem Ziel des Weichmachens, der Haftvermittlung, der Wärmestandfähigkeit und der Lagerstabilität kann als weitere Komponenten zur Borsäure auch Dimetylphtalat oder Diisobutylphtalat eingemischt sein, vorzugsweise je bis zu 20 Gew.-%, wiederum bezogen auf den Feststoffgehalt.

Wie oben bereits angedeutet, können auch feinkörnige Füllmaterialien eingemischt sein, vorzugsweise ZnO, MgO und/oder Farbpigmente.

In bezug auf das Verfahren wird die Aufgabe erfindungsgemäss dadurch gelöst, dass die Dispersion auf wenigstens eine der Substratflächen aufgetragen, die zu verklebenden Substratflächen nass aufeinandergelegt und während wenigstens etwa 0,5 sec mit wenigstens 0,1 N/cm² angedrückt werden.

Beim Austritt der Dispersion aus einer Sprühvorrichtung, einer Spritzdüse, einem Spritzbalken oder einem ähnlichen Zerstäubungsmittel, beginnt die drucksensible Dispersion sofort zu koagulieren. Neben der Verbesserung der Initialhaftkraft hat dies den Vorteil, dass praktisch keine staubförmigen Partikel in die Umgebungsluft austreten, welche Arbeitsplatzhygiene und Umwelt belasten. Die Koagulation ist derart schnell, dass bei extremen Bedingungen auf vertikale Flächen dicke Schichten, sogar warzenförmige Buckel aufgetragen werden können, ohne dass die Schicht abläuft.

Wird die erfindungsgemässe Dispersion anstelle des Aufspritzens oder Aufsprühens aufgewalzt, aufgestrichen oder aufgegossen, kann die Initialkraft der Haftung abfallen. Obwohl dies gegenüber dem vorher bekannten Stand der Technik eine Verbesserung ist, genügt erfindungsgemäss in der Regel nur das Aufspritzen bzw. Aufsprühen in vollem Umfang.

Bevorzugt wird das Sprühgut mit einem Luftdruck von 0,5 bis 1,5 bar und einem Materialdruck von 0,3 bis 0,6 bar aufgetragen.

Das Sprühgut wird vorzugsweise mit einer spezifischen Menge von 30 bis 300 g/m², insbesondere 50 bis 150 g/m², aufgetragen. Das Aufsprühen erfolgt vorzugsweise bei Raumtemperatur, die Initialhaftkraft greift derart rasch und stark, dass sich eine Erwärmung in der Praxis normalerweise erübrigt.

Die zu verklebenden nassen Substratflächen können sofort nach dem Beschichten oder bis 60 min, vorzugsweise bis 30 min später aufeinandergedrückt werden, ohne dass die Initialhaftkraft wesentlich verändert wird.

Das Andrücken erfolgt zweckmässig während 1 bis 5 sec, vorzugsweise mit 0,1 bis 1 N/cm², insbesondere mit etwa 0,5 N/cm². Das Andrücken kann mehrmals erfolgen, mit vollständiger oder Teilentlastung. Durch Wiederholungen, auch durch Erhöhen des Anpressdruckes kann die Initialhaftung und die Zunahme der Haftung erhöht werden, was nicht immer erwünscht ist. Wesentlich ist die sofortige Bearbeitbarkeit und das Aufrechterhalten der Initialhaftkraft bei längerer Ablüftzeit.

Eine besonders vorteilhafte Anwendung der erfindungsgemässen sprühbaren Dispersion liegt im Verkleben von Schaumstoffen. Ein häufiger Arbeitsgang besteht hier darin, dass quaderförmige Schaumstoffblöcke zu Kissen verklebt werden, indem die schmalen Seitenflächen eingeknickt und nach dem Auftragen eines erfindungsgemässen Klebers sofort nass aufeinandergedrückt werden können. Dank der hohen Initialhaftkraft kann der angelegte Pressdruck sofort wieder weggelassen werden. Ein Zurückfedern oder Verschieben des gespannten Schaumstoffs konnte nie festgestellt werden, auch bei Ablüftzeiten bis zu einer halben Stunde.

Schaumstoffe aller Art, beispielsweise aus Polyäthylen, Polyäther, Polyurethan oder Naturlatex, haben ein breites Verwendungspektrum in der Polstermöbelindustrie, für Sportartikel usw. Eine besonders wertvolle Anwendung liegt im Ueberziehen von geformten Schaumstoffen mit einem textilen Ueberzug, beispielsweise mit einem Gewebe überzogene Fahrzeugsitze.

Die wichtigsten Vorteile der vorliegenden Erfindung können wie folgt zusammengefasst werden:
- Ausserordentlich hohe und schnelle Initialhaftkraft von nassen Dispersionen, auch bei Raumtemperatur und längerer Ablüftung
- Keine organischen Lösungsmittel oder Lösungsmittelkomponenten, welche Arbeitsplatz und Umwelt belasten, nebelarmer Sprühauftrag, geringe Abwassermengen, die gut gereinigt und entsorgt werden können, deshalb keine Probleme mit strengen arbeitsplatzhygienischen und feuerpolizeilichen Vorschriften oder Abwasserverordnungen.
- Breites Anwendungsspektrum.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 die Anfangshaftung F verschiedener Klebstofftypen in Abhängigkeit der Ablüftzeit, und
- Fig. 2 den Verlauf der Abbindung von verschiedenen Klebstofftypen.

Für die Versuche ist jeweils ein quaderförmig ausgebildeter Schaum mittlerer Härte mit einer Klebefläche von 3 x 3 cm eingesetzt worden. Bei allen Varianten werden die Dispersionen bei Raumtemperatur aufgetragen, wobei die Acrylsäureestercopolymere und kolloidalen Chloroprenpolymerisate in bezug auf den Feststoffgehalt im Gewichtsverhältnis 1:1 gemischt auf zwei Substratflächen aufgetragen werden. Ebenso enthalten alle Klebstofftypen 1 bis 2 Gew.-% Borsäure.

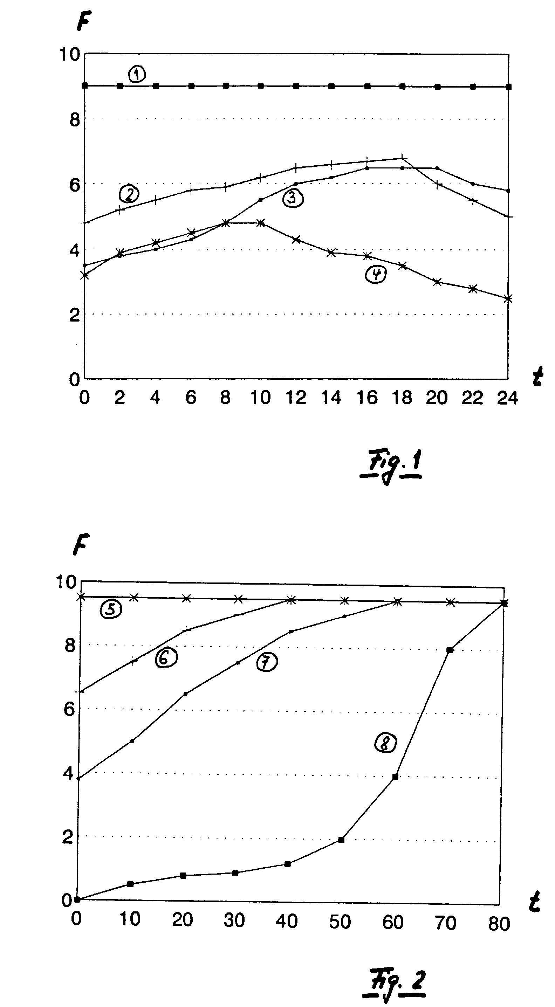

In Fig. 1 ist mit F die Anfangshaftung in N/cm² in Funktion der Ablüftzeit t in Minuten aufgetragen, die Raumtemperatur lag bei etwa 15°C, die beiden Klebeflächen wurden während 5 sec mit einem Anpressdruck von 0,5 N/cm² aneinander gepresst. Der Dispersionskleber wurde mit 140 g/m² aufgetragen.

Die parallel zur Zeitabszisse verlaufende Kurve 1 zeigt eine Schaumausrissgrenze von etwa 9N/cm².

Kurve 2 zeigt dem Verlauf der Anfangshaftung des erfindungsgemässen Dispersionsklebers 3086 der Anmelderin. Die unmittelbar nach dem Anpressen gemessene Anfangshaftung liegt bei etwa 5 N/cm². Werden die mit dem Dispersionskleber beschichteten Substratflächen nach einer Ablüftzeit bis 18 min sammengelegt und aufeinandergedrückt, steigt die Anfangshaftung bis gegen etwa 7 N/cm², sinkt jedoch bei längeren Ablüftzeiten wegen Überschreiten der offenen Zeit verhältnismässig stark ab.

Die Kurve 3 zeigt den erfindungsgemässen Dispersionskleber SIMALFA 308 der Anmelderin, welcher verglichen mit Kurve 2 eine verhältnismässig geringe Anfangshaftung von etwa 3,5 N/cm² hat. Bei längeren Ablüftzeiten steigt die Anfangshaftung jedoch stark an und erreicht bei einem vorherigen Ablüften ten 20 min etwa 6,5 N/cm². Werden die nassen Substratflächen noch später aufeinandergedrückt, fällt die Anfangshaftung leicht ab.

Kurve 4 mit dem erfindungsgemässen Dispersionskleber 3087 der Anmelderin hat verglichen mit Kurve 3 eine noch etwas tiefere Anfangshaftung. Sollte diese den praktischen Anforderungen nicht genügen, was in der Praxis kaum der Fall sein wird, können die beschichteten Oberflächen vorerst während einigen Minuten abgelüftet werden, dann steigt die Anfangshaftung deutlich an, sinkt jedoch nach 10 min bereits wieder etwas ab.

Der Klarheit wegen wird hier nochmals betont, dass die Kurven 2 bis 4 von Fig. 1 immer die Anfangshaftung, unmittelbar nach dem Anpressen während 5 sec gemessen, zeigen. Der zeitliche Verlauf der Abbindung geht aus diesen Kurven nicht hervor.

Würde ein Schaum geringer Härte, z.B. ein Polyuretanschaum einer Dichte von 30 - 40 kg/m³ mit einer Schaumausrissgrenze von etwa 6,5 N/cm², eingesetzt, würden die höchsten Werte für die Anfangshaftung der Kurven 2 und 3 gerade genügen, den Schaum auszureissen.

In Fig. 2 ist der Ablauf der Abbindung des erfindungsgemässen Dispersionskleber SIMALFA 308 dargestellt. Die Raumtemperatur lag bei 17°C, Pressdruck und Anpresszeiten entsprachen Fig. 1. Der Dispersionskleber wurde mit lediglich 120 g/m² aufgetragen. Die mittlere Härte des eingesetzten Schaumes liegt etwas höher als bei Fig. 1, etwa bei 9,5 N/cm² (Kurve 5). Gemäss Kurve 6 werden während etwa 20 min abgelüftete Substratflächen aufeinander gelegt und während 5 sec mit einem Pressdruck von 0,5 N/cm² zusammengepresst. Unmittelbar darauf liegt die Anfangshaftung bei 6,5 N/cm². Nach jeweils 10 min wird das Klebvermögen einer Probe geprüft. Dieses steigt an und erreicht nach etwa 40 min die Schaumausrissgrenze.

Zur Ermittlung von Kurve 7 wird in derselben Weise verfahren. Die nassen Substratflächen werden jedoch schon 1 min nach dem Auftragen aufeinander gedrückt. Das Klebvermögen steigt von der Anfangshaftung von etwas unter 4 N/cm² bis zur Schaumausrissgrenze nach etwa 60 min an.

Bei einem Schaum von geringerer Härte, beispielsweise beim oben diskutierten Polyuretanschaum, würde das Klebvermögen gemäss Kurve 6 sofort nach dem Zusammenpressen, gemäss Kurve 7 etwa 20 min später erreicht. Dieser Wert ist jedoch nicht von besonderer Bedeutung, viel wichtiger ist die für eine sofortige Weiterverarbeitung hinreichende Anfangshaftung.

Kurve 8 zeigt schliesslich noch den Kurvenverlauf eines allgemein üblichen Dispersionsklebers, welcher eine Anfangshaftung von praktisch Null zeigt und langsam ansteigt. Selbst die niedrigsten erfindungsgemässen Werte für die Anfangshaftung werden von solchen Dispersionsklebern erst nach beinahe einer Stunde erreicht. Damit entfällt die Möglichkeit einer sofortigen Weiterverarbeitung oder einem Transport nach dem Zusammendrücken, der Dispersionskleber greift erst nach etwa 50 min in verarbeitungstechnisch notwendigem Umfang.

## Patentansprüche

1. Aufsprühbare Dispersion auf der Basis eines Acrylsäureestercopolymers und eines kolloidalen Chloroprenpolymerisats,
dadurch gekennzeichnet, dass
sie Borsäure enthält.

2. Dispersion nach Anspruch 1, dadurch gekennzeichnet, dass sie bei einem Gewichtsverhältnis des Acrylsäureestercopolymers zum Chloroprenpolymerisat von vorzugsweise 1 : 10 bis 1,5 : 1, insbesondere etwa 1:1, in bezug auf den Feststoffgehalt, einen Borsäureanteil von 0,1 bis 10 Gew.-% hat.

3. Dispersion nach Anspruch 2, dadurch gekennzeichnet, dass sie einen Borsäureanteil von 0,5 bis 5 Gew.-%, vorzugsweise 1 bis 2 Gew.-%, hat.

4. Dispersion nach einem der Ansprüche 1 bis 3, dadurch gekennzeichnet, dass sie Natriumlaurylsulfat, vorzugsweise 0,1 bis 3 Gew.-%, enthält.

5. Dispersion nach einem der Ansprüche 1 bis 4, dadurch gekennzeichnet, dass sie ein N-Alkylpyrrolidon , vorzugsweise bis zu 15 Gew.-% N-Methyl-2-Pyrrolidon, und/oder eine Substanz der Gruppe bestehend aus N-Octyl-2-Pyrrolidon und N-Dodecyl-2-Pyrrolidon enthält, vorzugsweise jeweils bis zu 10 Gew.-%, immer bezogen auf den Feststoffgehalt.

6. Dispersion nach einem der Ansprüche 1 bis 5, dadurch gekennzeichnet, dass sie Dimethylphtalat oder Diisobutylphtalat enthält, vorzugsweise je bis zu 20 Gew.-%, bezogen auf den Feststoffgehalt.

7. Verfahren zum elastischen Verkleben zweier Substratflächen, wovon wenigstens eine porös ausgebildet ist, mit einer Dispersion nach einem der Ansprüche 1 bis 6,
dadurch gekennzeichnet, dass
die Dispersion auf wenigstens eine der Substratflächen aufgetragen, die zu verklebenden Substratflächen nass aufeinandergelegt und während wenigstens etwa 0,5 sec mit wenigstens 0,1 N/cm² angedrückt werden.

8. Verfahren nach Anspruch 7, dadurch gekennzeichnet, dass die Dispersion aufgespritzt oder aufgesprüht wird, vorzugsweise mit einem Luftdruck von 0,5 bis 1,5 bar und einem Materialdruck von 0,3 bis 0,6 bar.

9. Verfahren nach Anspruch 7 oder 8, dadurch gekennzeichnet, dass die aufgetragene Dispersion vor dem Aufeinanderlegen und Anpressen 0 bis 60 min, vorzugsweise während 0 bis 30 min, abgelüftet wird.

10. Verfahren nach einem der Ansprüche 7 bis 9, dadurch gekennzeichnet, dass die zu verklebenden, nassen stratflächen wenigstens einmal während 1 bis 5 sec angedrückt werden, vorzugsweise mit 0,2 bis 1 N/cm².

## Claims

1. A sprayable dispersion containing an acrylic acid ester copolymer and a colloidal chloroprene polymerizate,
characterized in that
it contains boric acid.

2. A dispersion to Claim 1, characterized in that it has at a weight ratio of the acrylic acid ester copolymer to the chloroprene polymerizate of perferably 1:10 to 1,5:1, particularly about 1:1, a boric acid content of 1,0 to 10% by weight, based on the solids content.

3. A dispersion to Claim 2, characterized in that it has a boric acid proportion of 0,5 to 5% by weight, preferably 1 to 2% by weight.

4. A dispersion to one of Claims 1 to 3, characterized in that it contains sodium lauric sulfate, preferably 0,1 to 3% by weight.

5. A dispersion to one of Claims 1 to 4, characterized in that it contains an N-alkyl pyrrolidon, preferably N-methyl-2-pyrrolidon up to 15% by weight, and/or a component of the group consisting of N-octyl-2-pyrrolidon and N-dodecyl-2-pyrrolidon, preferably each of up to 10% by weight, always based on the solids content.

6. A dispersion to one of Claims 1 to 5, characterized in that it contains dimethylphtalat or diisobutylphtalat, preferably each up to 20% by weight, based on the solids content.

7. A process for elastic bonding of two substrate surfaces, at least one of which is porous, with a dispersion as specified in Claims 1 to 6,
characterized in that
the dispersion is sprayed to at least one substrate surface, the substrate surfaces to be bonded are placed in a wet condition on top of one another and are pressed together for a minimum of approx. 0,5 seconds with a pressure of at least 0,1 N/cm2.

8. A process to Claim 7, characterized in that the dispersion is sprayed or atomized, preferably with an air pressure of 0,5 to 1,5 bar and a material inlet pressure of 0,3 to 0,6 bar.

9. A process to Claims 7 or 8, characterized in that the sprayed dispersion is flashed off 0 to 60 min before being layed and pressed together, preferably for 0 to 30 min.

10. A process to one of Claims 7 to 9, characterized in that the wet substrate surfaces to be bonded are pressed together at least once for 1 to 5 sec, preferably at a pressure of 0,2 to 1 N/cm².

## Revendications

1. Dispersion pulvérisable à base d'un copolymère d'ester d'acide acrylique et d'un polymérisat colloïdal de chloroprène caractérisée en ce qu'elle contient de l'acide borique.

2. Dispersion selon la revendication 1, caractérisée en ce que, pour un rapport en poids entre le copolymère d'ester d'acide acrylique et le polymérisat de chloroprène, préférentiellement de 1/10 à 1,5/1, en particulier de l'ordre de 1/1, exprimé en teneur de matières solides, elle contient une proportion d'acide borique de 0,1 à 10% en poids.

3. Dispersion selon la revendication 2, caractérisée en ce qu'elle contient une proportion de 0,5 à 5% en poids, de préférence de 1 à 2 % en poids d'acide borique.

4. Dispersion selon l'une des revendications 1 à 3, caractérisée en ce qu'elle contient du laurylsulfate de sodium, de préférence de 0,1 à 3% en poids.

5. Dispersion selon l'une des revendications 1 à 4, caractérisée en ce qu'elle contient une N-alkylpyrrolidone, de préférence jusqu'à 15 % en poids de N-méthyl-2-pyrrolidone, et/ou une substance du groupe composé de la N-octyl-2-pyrrolidone, et de la N-dodécyl-2-pyrrolidone, de préférence respectivement jusqu'à 10% en poids, ici aussi exprimé en teneur en matières solides.

6. Dispersion selon l'une des revendications 1 à 5, caractérisée en ce qu'elle contient du phthalate de diméthyle ou du phthalate de diisobutyle, de préférence jusqu'à 20 % en poids chacun, exprimé en teneur en matières solides.

7. Procédé de collage élastique de deux surfaces de substrats, dont au moins l'une est de structure poreuse, au moyen d'une dispersion selon l'une des revendications 1 à 6, caractérisé en ce que la dispersion est étendue au moins sur l'une des surfaces de substrats, les surfaces de substrats à coller sont appliquées l'une contre l'autre à l'état humide et sont appuyées au moins pendant environ 0,5 sec sous une pression d'au moins 0,1 N/cm².

8. Procédé selon la revendication 7, caractérisé en ce que la dispersion est pulvériséeée ou atomisée, de préférence sous l'effet d'une pression d'air de 0,5 à 1,5 bar et une pression de matière de 0,3 à 0,6 bar.

9. Procédé selon la revendication 7 ou 8, caractérisé en ce que la dispersion étendue est désaérée pendant 0 à 60 min, de préférence pendant 0 à 30 min avant d'appliquer et d'appuyer les surfaces l'une contre l'autre.

10. Procédé selon l'une des revendications 7 à 9, caractérisé en ce que les surfaces de substrats humides à coller sont appuyées l'une contre l'autre au moins une fois pendant 1 à 5 sec, de préférence sous une pression de 0,2 à 1 N/cm².
